(19) Europäisches Patentamt
European Patent Office
Office européen des brevets

(11) **EP 2 375 237 A1**

(12) **EUROPEAN PATENT APPLICATION**

(43) Date of publication:
**12.10.2011 Bulletin 2011/41**

(51) Int Cl.:
***G01N 21/03*** (2006.01)

(21) Application number: **10425102.0**

(22) Date of filing: **30.03.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(71) Applicant: **Scienza Industria Tecnologia S.r.l.**
**56023 Cascina (IT)**

(72) Inventors:
• **D'Amato, Francesco**
**56023 Cascina (Pisa) (IT)**
• **Rosa Clot, Paolo**
**56023 Cascina (Pisa) (IT)**
• **Rosa Clot, Marco**
**56023 Cascina (Pisa) (IT)**
• **Chiarugi, Antonio**
**56023 Cascina (Pisa) (IT)**

(74) Representative: **Conti, Marco**
**Bugnion S.p.A.**
**Via di Corticella, 87**
**40128 Bologna (IT)**

Remarks:
A request for correction of fig.2 has been filed pursuant to Rule 139 EPC. A decision on the request will be taken during the proceedings before the Examining Division (Guidelines for Examination in the EPO, A-V, 3.).

(54) **Herriott multipass cell with spherical mirrors and method for making it**

(57) A method for making a Herriott cell comprises a step of preparing two concave mirrors (3) separated by a first distance D1 and having the same spherical curvature whose radius of curvature r is determined according to the first distance D1 and a first length L1 of a predetermined optical path that a beam of light (R) completes inside the cell, the beam of light (R) covering the first length L1 inside the cell in a predetermined first number of revolutions N1 and the step of preparing an element (5) for moving one mirror (3) relative to the other, for moving the two mirrors (3) towards or away from each other by at least a quantity Q1 which defines a second distance D2 between the mirrors (3). The second distance D2 is determined according to the radius of curvature r of the mirrors (3) and a second length L2 of the optical path that the beam of light (R) completes inside the cell, the beam of light (R) covering the second length L2 in a second number of revolutions N2 which is greater than or less than the first number of revolutions.

FIG 1

**Description**

This invention relates to a Herriott multipass cell with spherical mirrors and a method for making it. In particular, this invention relates to a method for making, that is to say, designing a Herriott multipass cell.

This invention may be applied in the technical field of scientific measurements, and in particular in the study of the properties of a gas.

Herriott cells are particular types of multipass cells, that is to say, optical devices mainly used to extend the optical path of a beam of light passing inside them.

Such cells comprise at least two mirrors facing each other and separated by a predetermined distance so that they repeatedly reflect a beam of light between one mirror and the other.

In prior art Herriott cells, the above-mentioned mirrors are concave, and may be spherical, that is to say, having a regular curvature, or astigmatic, that is to say, having a toroidal curvature.

Moreover, prior art cells normally comprise a tubular connecting body between the two mirrors, forming an independent cylindrical chamber, for isolating the environment inside the cell from the outside environment.

The special feature of Herriott cells is the possibility of obtaining an optical path for the beam of light which has significant length despite the availability of a cell with reduced dimensions. By positioning the two mirrors, for example spherical, at a predetermined distance from each other and with the concavities facing each other, it is possible to obtain multiple reflections of the beam of light between one mirror and the other. Consequently, the optical path completed by the beam in the cell is no longer equal only to the distance between the two mirrors, but rather equal to approximately the distance between the two mirrors multiplied by the number of reflections, or passes, that it completes in the cell.

For example, it is possible to obtain optical paths of dozens of metres despite having available cells which are just a few dozen centimetres long. Disadvantageously, the configuration of prior art Herriott cells is difficult and limited.

Prior art Herriott cells are made to order so as to make an optical path of a single predetermined length in a cell having predetermined dimensions. Document EP1972922 by the same Application describes a Herriott cell in which the mirrors are connected in such a way that they can move towards and away from each other to vary the distance between them. That allows a plurality of different optical paths (that is to say, having different stable configurations) for the same cell.

However, said document does not provide any indication about how to make such a cell, that is to say, it does not provide any method for determining the configuration of the cell according to a desired result.

Moreover, EP1972922 does not provides indications about possible criteria for optimising the choice of cell design parameters.

In this context, the technical purpose which forms the basis of this invention is to propose a method for making a Herriott cell and a Herriott cell made using that method which overcome the above-mentioned disadvantages of the prior art.

In particular, this invention has for an aim to provide a method for making a Herriott cell which is versatile and compact.

The technical purpose indicated and the aims specified are substantially achieved by a method for making a Herriott cell and a Herriott cell made with that method, comprising the technical features described in one or more of the appended claims. Further features and advantages of this invention are more apparent in the non-limiting description of a preferred embodiment of a method for making a Herriott cell and a Herriott cell made with that method, as illustrated in the accompanying drawings, in which:

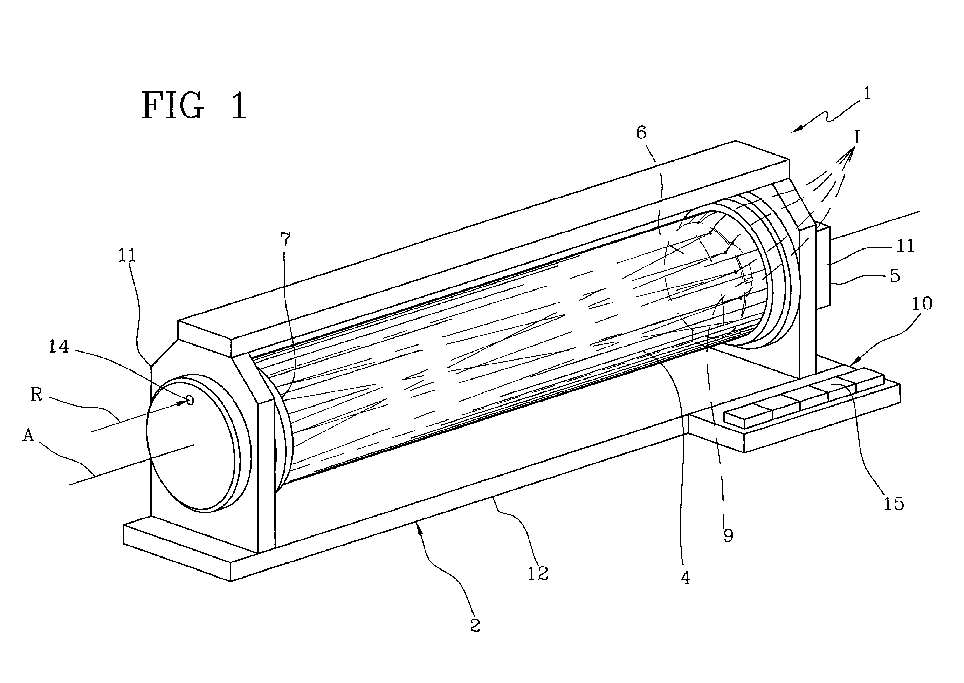

- Figure 1 is a perspective view of a Herriott cell according to this invention during operation;

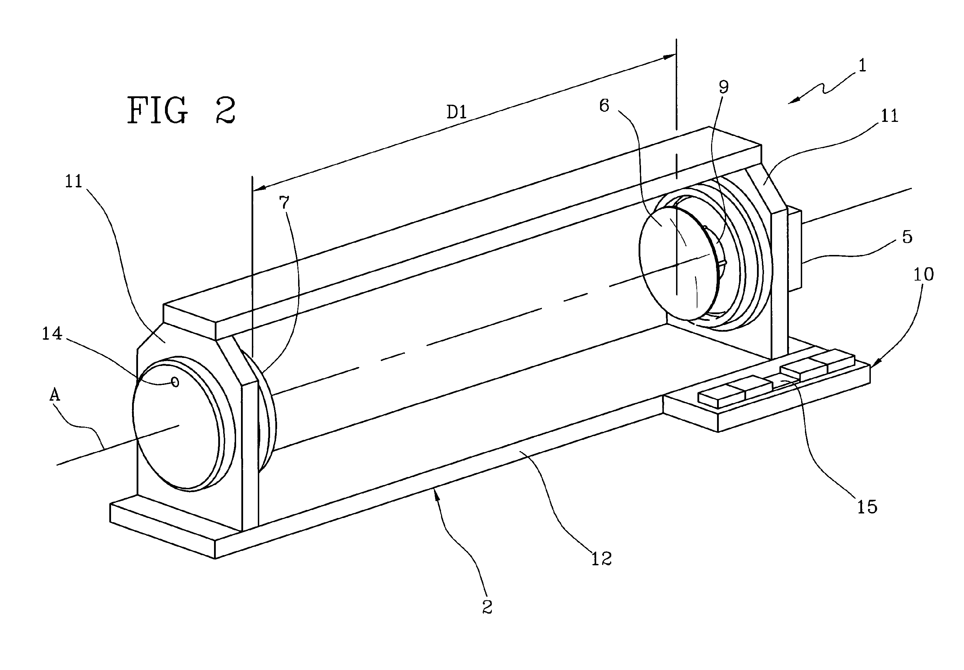

- Figure 2 is a perspective view of the Herriott cell of Figure 1 with some parts removed in a first configuration;

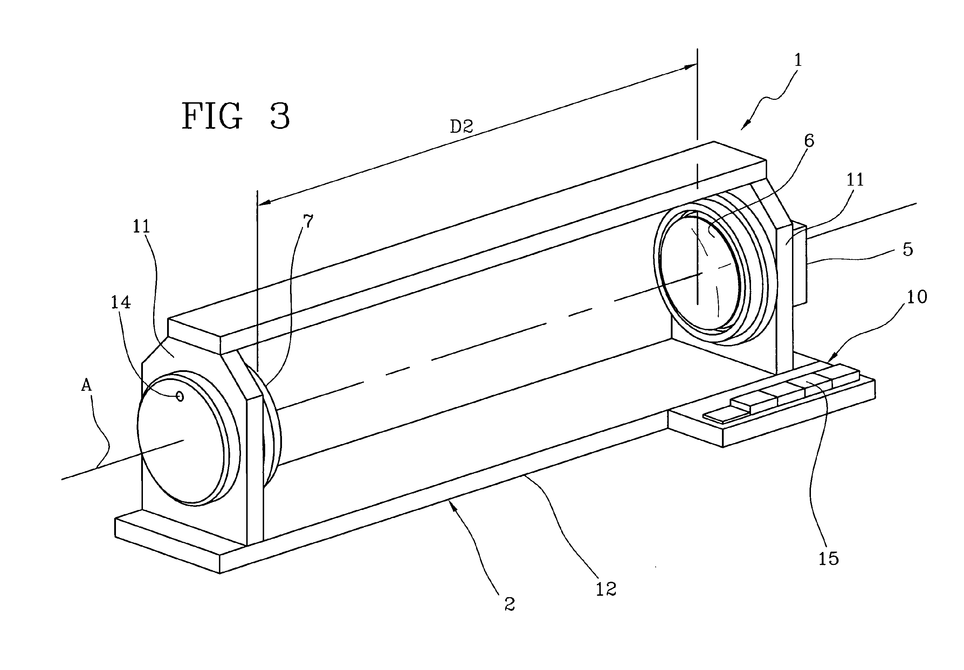

- Figure 3 is a perspective view of the Herriott cell of Figure 1 with some parts removed in a second configuration;

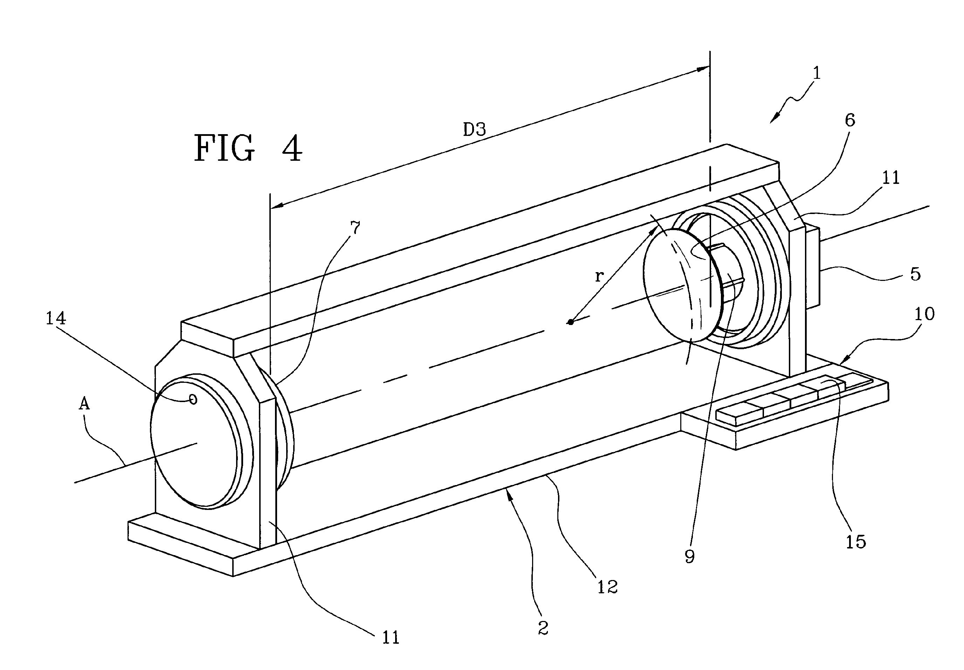

- Figure 4 is a perspective view of the Herriott cell of Figure 1 with some parts removed in a third configuration;
- Figures 5 to 9 are schematic representations of two mirrors of a Herriott cell according to this invention in successive configurations.

With reference to the accompanying drawings, the numeral 1 denotes a Herriott cell according to this invention.

The cell 1 comprises a supporting structure 2 extending in a main longitudinal direction of extension "A".

The supporting structure 2 comprises a base 12 and two coupling portions 11 for respective mirrors 3, in particular two mirrors 6, 7.

At each coupling portion 11 a concave mirror 6, 7, preferably having a spherical concavity, is mounted.

The mirrors 6, 7 are separated by a first distance D1, or reference distance, so that the respective concavities are facing each other and aligned in the main direction of extension "A", so that a beam of light R introduced into the cell 1 is reflected a plurality of times between one mirror 6, 7 and the other.

The beam of light R is introduced into the cell 1 through one of the mirrors 6, 7.

In particular, at least one of the mirrors 6, 7 comprises an input and/or output hole 14 for the beam of light R, the hole preferably being in an outer zone of the mirror 6, 7.

In the embodiment illustrated, one of the mirrors 6, 7 comprises a single input and output hole 14 for the beam of light R.

In an alternative embodiment (not illustrated), one of the mirrors comprises an input hole and the other mirror comprises an output hole for the beam of light.

By way of example, the beam of light R may be a laser, a maser or a beam of rays of another type. Moreover, the mirrors 6, 7 have the same radius of curvature r which is determined according to the first distance D1 and a first length L1 of a predetermined optical path which the beam of light R completes inside the cell 1.

The optical path is simply the path that the beam of light R completes inside the cell 1, and is defined by the repeated reflections to which the beam R is subjected each time it encounters the concave surface of one of the mirrors 6, 7.

This is described in more detail below.

To connect one mirror 6, 7 to the other, a preferably transparent tubular body 4 may be provided.

Advantageously, that allows the creation of a cell 1 internal chamber having a substantially prismatic shape in which the lateral surface is formed by the tubular body 4 and the bases are formed by the mirrors 6, 7.

The tubular body 4 is preferably connected to the coupling portions 11 by sealing means (not illustrated) for sealing the environment inside the chamber from the outside environment.

The tubular body 4 therefore allows measurements and experiments in an environment which is independent of the outside environment in which the cell is positioned or installed.

In other words, for example, a gas whose properties the user wants to measure can be placed in the tubular body 4.

The cell 1 also comprises an element 5 for moving one mirror 6, 7 relative to the other, for moving the two mirrors 6, 7 towards and/or away from each other in the main direction of extension "A".

In particular, the movement element 5 is designed to move one mirror 6, 7 relative to the other by a quantity Q1 such that it defines a second distance D2 between the mirrors 6, 7, which is different to the first distance D1.

Preferably, the movement element 5 also moves one mirror 6, 7 relative to the other by another quantity Q2 to define a third distance D3 between the mirrors 6, 7.

In other words, the cell 1 according to this invention may adopt a plurality of configurations, each defined by a respective distance between the mirrors 6, 7.

In a first configuration the two mirrors 6, 7 are separated by the first distance D1.

In a second configuration the two mirrors 6, 7 are separated by the second distance D2.

In a third configuration the two mirrors 6, 7 are separated by the third distance D3.

It should be noticed that in each configuration the optical path that the ray of light R completes inside the cell 1 has a different length. Preferably, the second distance D2 and the third distance D3 differ from the first distance D1 by a quantity which is less than 5% of the first distance D1.

Even more preferably, said difference is less than 2% of the first distance D1.

Advantageously, this allows a versatile, multi-configuration Herriott cell to be obtained, which is also compact because the dimensions are substantially unchanged for each configuration.

As described in more detail below, even a small variation in the distance between the mirrors 6, 7 allows important variations to be obtained in the length of the optical path which the beam of light R completes inside the cell 1.

The movement element 5 preferably acts only on one of the two mirrors 6, 7.

Consequently, the cell according to this invention preferably comprises one mobile mirror 6 and one stationary mirror 7.

In the embodiment illustrated, the movement element 5 comprises an adjusting screw (not illustrated) whose rotation moves a slide 9 to which the mobile mirror 6 is integrally connected.

Moreover, the inlet/outlet hole 14 is preferably made in the stationary mirror 7.

The cell 1 also preferably comprises a control unit 10 with a user interface 15 allowing the user to move the mobile mirror 6 to the desired distance from the stationary mirror 7 so as to obtain the optical path of the desired length.

In practice, the beam of light R is introduced into the cell 1 through the above-mentioned inlet/outlet hole 14, with a direction substantially parallel with the main direction of extension "A".

The beam of light R, during a first pass, passes from the inlet mirror, that is to say, the stationary mirror 7, to the other mirror.

Once it encounters the concave surface of the mirror opposite the inlet mirror, that is to say, the mobile mirror 6, the beam of light R is reflected at an angle which depends on the curvature of the mirror 6, and is directed towards the stationary mirror 7.

In this way, the beam of light R is reflected a plurality of times inside the cell 1 between one mirror 6, 7 and the other until it encounters the outlet hole, which, as indicated, in the embodiment illustrated coincides with the inlet hole 14.

Each stretch covered by the beam of light R between the two mirrors 6, 7 is called a "pass" and each point where the beam encounters each mirror 6, 7 is called an intercept "I".

Multiplication of the total number of "passes" by the distance between the mirrors 6, 7 allows approximate calculation of the length of the optical path that the beam of light R completes inside the cell 1.

It should be noticed that, since the concavity of the mirrors 6, 7 is spherical, the totality of the intercepts "I" on each mirror 6, 7 forms a circle. In light of this, the beam of light R may complete the above-mentioned number of passes in one or more revolutions "G" inside the cell 1.

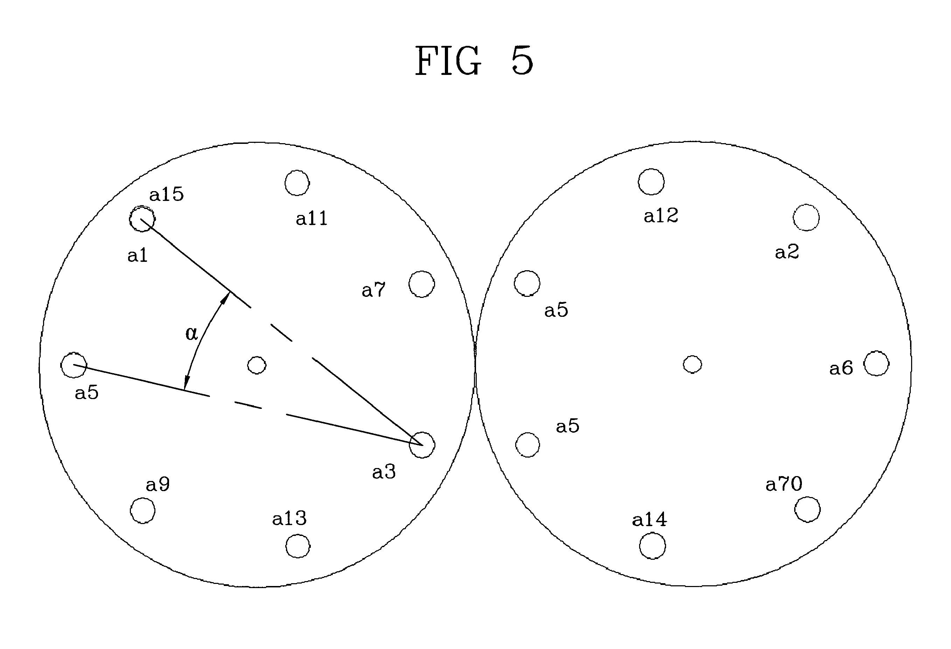

The "revolution" shall be considered completed when the sum of the angles α (see Figure 5), measured in a plane of the intercepts "I" of each mirror 6, 7, formed between the two lines joining each intercept "I" with the previous and next intercepts is greater than or equal to 360°.

Since the number of revolutions is closely linked to the number of passes, it is also closely linked to the length of the optical path.

The length of the optical path can also be approximately calculated by multiplying the number of passes per revolution by the number of revolutions by the distance between the mirrors 6, 7.

The method according to this invention comprises a sequence of steps designed for making a multi-configuration Herriott multipass cell which uses the possibility of varying the number of revolutions that the beam of light completes inside the cell to obtain a plurality of different lengths for the optical path.

In other words, the method according to this invention comprises operating on the distance between the mirrors 6, 7, varying it by small quantities to obtain a gradual variation in the number of revolutions.

Therefore, each configuration will feature a different distance between the mirrors 6, 7, and the aim of the small variation is mainly to vary the number of revolutions completed by the beam of light inside the cell 1 to obtain different lengths for the optical path.

First, the multi-configuration cell is made starting from certain design data which are initially set relative to user requirements so as to determine the geometry of the mirrors (that is to say, the radius of curvature).

In particular, said design data define a reference configuration, and comprise a reference distance between the mirrors 6, 7 (to approximately establish cell 1 dimensions), a predetermined reference length for the optical path and a number of revolutions which the beam of light R must complete in order to produce the first length L1 in the reference configuration.

For a simple description, the above-mentioned first configuration shall be used as the reference configuration.

Consequently, the reference distance is the first distance D1, the length of the reference optical path is a first length L1 and the number of revolutions of the reference configuration is a first number of revolutions N1.

Starting with these data, and using known formulas, it is possible to determine the radius of curvature r of the mirrors 6, 7.

To summarise, in the above-mentioned reference configuration (first configuration), the beam of light R completes an optical path having a first length L1 in a first number of passes P1 in the first number of revolutions N1.

In other words, at the last pass of the first configuration, the beam of light passes from the mobile mirror 6 to the stationary mirror 7 and intercepts the latter at the inlet/outlet hole 14. At this point the mirrors 6, 7 with the radius of curvature r may be placed at the first distance D1 from each other.

Once the geometry of the mirrors has been determined, the method according to this invention comprises determining the additional distances between the mirrors for defining additional configurations of the cell 1.

For a simple description, the above-mentioned second distance D2 and third distance D3 between the mirrors 6, 7 shall be determined in order to define the second and third configurations of the cell 1 (but the method allows any number of configurations to be determined).

The second distance D2 is determined, using known formulas, according to the radius of curvature r of the mirrors 6, 7 and a second number of revolutions G2 which the beam of light R completes inside the cell 1.

In other words, the second distance D2 is determined by setting the radius of curvature r of the mirrors 6, 7, previously established, a second number of passes P2 and a second number of revolutions G2, thus obtaining a second length L2 of the optical path.

By varying the distance between the mirrors 6, 7 by a predetermined quantity, the beam of light R no longer intercepts the inlet/outlet hole 14 after the first number of revolutions N1, but rather after a number of revolutions which is higher or lower, depending on whether or not the two mirrors 6, 7 are moved towards or away from each other by the movement element 5.

Once the second distance D2 has been determined, the movement element 5 therefore only needs to move the mobile mirror 6 by the quantity Q1 equal to:

$$Q1 = D2-D1$$

The second number of revolutions G2 is preferably a unit higher (or lower) than the first number of revolutions G1, and consequently moving the mirrors 6, 7 away from each other by the quantity Q1 the beam of light R no longer intercepts the stationary mirror 7 at the inlet/outlet hole 14 at the end of the first number of revolutions G1, but at the end of the second number of revolutions G2.

In other words, after the first number of revolutions G1 the beam of light R does not exit the cell 1, but instead completes another revolution.

By completing another revolution, the optical path that the beam of light R completes inside the cell 1 is significantly extended, despite the relative variation of the distance between the mirrors being only several percentage points.

As similar procedure is used for determining the third configuration.

Like the second distance D2, the third distance D3 is determined according to the radius of curvature r of the mirrors 6, 7 and a third number of revolutions G3 which the beam of light R completes inside the cell 1.

Consequently, the third distance D3 is determined by setting the radius of curvature r of the mirrors 6, 7, previously established, the third number of passes P3 and the third number of revolutions G3, thus obtaining a third length L3 of the optical path.

The third number of revolutions G3 is preferably a unit lower (or higher) than the second number of revolutions G2.

Once the third distance D3 has been determined, the movement element 5 therefore only needs to move the mobile mirror 6 by the additional quantity Q2 equal to:

$$Q2 = D3 - D1$$

Consequently, moving the mirrors 6, 7 towards each other by the additional quantity Q2 the beam of light R no longer intercepts the stationary mirror 7 at the inlet/ outlet hole 14 at the end of the first number of revolutions G1, but at the end of the third number of revolutions G3.

In light of this, the beam of light R exits the cell 1 one revolution before it does in the first configuration.

It should be noticed that, in a three-configuration Herriott cell, the first length L1 of the optical path is approximately double the third length L3 of the optical path and around two thirds of the second length L2 of the optical path in the example described above.

Obviously, it is possible to obtain Herriott cells with more than three configurations using a method which is the same as that described so far.

In other words, starting with a reference configuration having an intermediate first number of revolutions G1, the steps described above are performed before rising towards the configuration having the maximum number of revolutions, then descending from G1 to the configuration having the minimum number of revolutions.

Therefore, the invention relates to a method for making a Herriott cell 1, comprising the steps of:

- preparing two concave mirrors 3 having the same spherical curvature with a radius of curvature r, so that the length L of an optical path that a beam of light R completes inside the cell 1, performing a number of passes P and a number of revolutions G, is defined by the values of the radius of curvature r and a distance D between the mirrors 3;
- preparing an element 5 for moving one mirror 3 relative to the other, for moving the two mirrors 3 towards or away from each other, for positioning the mirrors 3 in a plurality of predetermined configurations defining a corresponding plurality of values of the distance D between the mirrors 3 and therefore a corresponding plurality of values of the length L of the optical path, there being a predetermined number of configurations.

According to the invention, said plurality of values of the distance D between the mirrors 3 corresponding to the plurality of configurations is determined by means of the following steps:

a) setting a reference value for the distance Dref between the mirrors 3, a value for the maximum number of passes Pmax and a value for the maximum number of revolutions Gmax which is greater than or equal to the predetermined number for the cell 1 configurations.

The reference distance Dref value is set according to the cell desired dimensions.

The maximum number of passes Pmax is set according to the desired maximum length of the optical path (according to customer specifications).

Said maximum length, divided by the reference distance between the mirrors, approximately corresponds to the maximum number of passes Pmax. Moreover, the parameter Pmax is also set according to two additional parameters (which determine a limit higher than Pmax):

- reflectivity of the mirrors (since the reflectivity of the mirrors is less than 1 and the cell transmission is that reflectivity raised to a power equal to the number of passes P, if P is very high the cell absorbs all of the light coming in);
- diameter of the beam on the mirrors (it is important to avoid interference between the various reflections of the beams of light which encounter the mirrors, and to prevent beams which are close to the inlet/ outlet hole from falling in the hole, even partially, instead of completing the predetermined route).

The maximum number of revolutions Gmax is preferably set equal to the predetermined number for the cell 1 configurations. In the example described below, the intention is to design a cell with 5 configurations. In that case, Gmax is preferably set equal to 5.

After the setting step (a), the method comprises a step (b) of selecting a first number of revolutions G1 for the first configuration, depending on the maximum number of revolutions Gmax.

The first number of revolutions G1 is preferably selected equal to Gmax/2, if Gmax is an even number, or equal to (Gmax+1)/2, if Gmax is an odd number.

Moreover, the method comprises a step (c) of deriving a value for the radius of curvature r of the mirrors 3 and a first value D1 for the distance between the mirrors (for the first configuration), depending on the maximum number of revolutions Gmax, the maximum number of passes Pmax and the reference distance Dref between the mirrors 3 which were set in step (a) and according to the first number of revolutions G1 selected in step (b). Preferably, the deriving step (c) comprises deriving the value of the radius of curvature r and the first value D1 for the distance between the mirrors 3 according to a number of passes P1 equal to Pmax*(G1/Gmax) and according to the reference distance Dref.

Preferably, the value of the radius of curvature r and the first value D1 for the distance between the mirrors are derived in such a way as to minimise the difference between D1 and Dref.

Then, there is a step (d) of selecting a second number of revolutions G2, different to the first number of revolutions G1, for the second configuration, according to the maximum number of revolutions Gmax (that is to say, the first number of revolutions G1, which is in turn a function of Gmax).

The second number of revolutions G2 is preferably selected according to the following equation

$$G2 = G1 + k$$

where k is an integer greater than -G1.

More preferably, k is equal to 1 or -1.

Then, the method comprises a step (e) of deriving a second value D2 for the distance between the mirrors 3 for the second configuration, depending on the maximum number of revolutions Gmax and the maximum number of passes Pmax which were set in step (a) and according to the second number of revolutions G2 selected in step (d).

Preferably, the second value D2 for the distance between the mirrors 3 is derived according to a number of passes P2 equal to Pmax*(G2/Gmax) and according to the value r of the radius of curvature of the mirrors already derived in step (c).

Then the method comprises repeating steps (d) and (e) for the additional configurations, until a predetermined number has been reached for the configurations.

In step (d), when performed for a k-th configuration, the number of revolutions Gk is selected so that it is different from all of the numbers of revolutions already selected.

Moreover, the step (d) comprises selecting the number of revolutions (Gk) of the k-th configuration by adding or subtracting a unit to/from the number of revolutions Gk-1 selected for the previous configuration (that is to say, the k-1-th).

Preferably, the step of preparing the movement element 5 comprises the movement element 5 moving the two mirrors 3 towards or away from each other between a plurality of separate positions corresponding to the plurality of values for the distance D between the mirrors 3.

The movement element 5 is preferably prepared in such a way that it positions the mirrors 3 at the predetermined distances D according to a command issued by a user.

This makes the cell 1 particularly easy to use, since it guarantees that all of the configurations are stable, without the need for position adjustments or realignments.

Preferably, only one of the two mirrors 3 comprises a beam R inlet and outlet hole 14, the movement element 5 being prepared in such a way that it only moves the mirror 3 comprising the hole 14.

This makes the cell 1 more reliable, avoiding the risk that the beam of light strikes the edge of the hole.

Therefore, this invention also provides a Herriott multipass cell comprising:

- two concave mirrors 3 having the same spherical curvature with a radius of curvature r, positioned so that the length L of an optical path that a beam of light R completes inside the cell 1, performing a number of passes P and a number of revolutions G, is defined by the values of the radius of curvature r and a distance D between the mirrors 3;
- a movement element 5 connected to at least one of the mirrors 3, for varying the distance D between the mirrors 3, for positioning the mirrors 3 in a plurality of predetermined configurations defining a corresponding plurality of values of the length L of the optical path, there being a predetermined number of configurations.

According to the invention, the values of the plurality of values for the distance D between the mirrors are selected according to a reference value for the distance Dref between the mirrors 3, a predetermined value for the maximum number of passes Pmax and a predetermined value for the maximum number of revolutions Gmax according to the predetermined number for the configurations of the cell 1.

For information about how to set the design parameters Dref, Pmax and Gmax, reference is made to the above description of the method for designing the cell 1.

Preferably, the movement element 5 is configured in such a way that it moves at least one of the mirrors 3 between a plurality of separate positions corresponding to the plurality of values for the distance D between the mirrors 3.

Advantageously, this makes the Herriott cell particularly simple to use, with the possibility for the user to vary the configuration simply without errors and without the need for adjustments.

Preferably, the cell 1 comprises an operating element (included in the user interface 15, for example consisting of a selector knob or a pushbutton with a plurality of predetermined stable positions) accessible from the outside of the cell 1 and connected to the movement element 5 for positioning the mirrors 3 at the predetermined distances D according to a command issued by a user.

Preferably, only one of the two mirrors 3 comprises a hole 14 for beam R inlet and outlet, whilst the other mirror 3 has no holes in it.

In light of this, the movement element 5 is configured so that it only moves the mirror 3 comprising the hole 14.

Advantageously, this makes the cell 1 particularly robust in operation, since in that way it avoids the risk that, when passing from one configuration to another, the beam R intercepts the edge of the hole 14.

It should be noticed that one of the two mirrors 3 (or both) is also able to rotate about the longitudinal axis A.

For this purpose, there is a motor connected to the rotating mirror (or mirrors) which imparts rotation.

Operatively, there is a step of rotating one mirror (or both) about the axis A.

This allows further variables and degrees of freedom in cell 1 design and management of its operation.

For example, the following is a description of a numeric application of the method according to this invention for a cell with five configurations:

- setting the reference distance Dref = 411.019 mm;
- setting the maximum number of passes Pmax = 74;
- setting the maximum number of revolutions, for example equal to the number of configurations Gmax = 5;
- number of revolutions of the first configuration G1 = (Gmax+1)/2 - 3, Gmax+1 since Gmax is an odd number;
- approximate number of passes of the first configuration P1 = (G1/Gmax)*Pmax = 46;
- radius of curvature of the mirrors r = 516 mm;
- the first actual number of passes is P1 = 46;
- the length of the optical path in the first configuration L1 = 18.9069 m;
- preparing the mirrors with the radius of curvature r = 516 mm at the distance D1 = 411.019 mm;
- determining the number of revolutions of the second configuration G2 = G1+1 = 4;
- determining the approximate number of passes of the second configuration P2 = (G2/Gmax)*Pmax = 59;
- determining the second distance D2 = 408.719 mm;
- the actual number of passes of the second configuration is P = 60;
- the length of the optical path in the second configuration L2 = 24.5231 m;
- determining the number of revolutions of the third configuration G3 = G1+2 = 5;
- determining the number of passes of the third configuration P3 = (G3/Gmax)*Pmax = 74;
- determining the third distance D3 = 407.29 mm;
- the actual number of passes of the third configuration is P3 = 74;

- the length of the optical path in the third configuration L3 = 30.1395 m;
- determining the number of revolutions of the fourth configuration G4 = G1-1 = 2;
- determining the approximate number of passes of the fourth configuration P4 = (G4/Gmax)*Pmax = 30;
- determining the fourth distance D4 = 415.33 mm;
- the actual number of passes of the fourth configuration is P4 = 32;
- the length of the optical path in the fourth configuration L4 = 13.2906 m;
- determining the number of revolutions of the fifth configuration G5 = G1 - 2 = 1;
- determining the approximate number of passes of the fifth configuration P5 = (G5/Gmax)*Pmax = 15;
- determining the fifth distance D5 = 401.179 mm;
- the actual number of passes of the fifth configuration is P5 = 14;
- the length of the optical path in the fifth configuration L5 = 5.6165 m;
- preparing a movement element able to move the two mirrors towards and/or away from each other, for positioning the mirrors at the distances D5 = 401.179 mm, D4 = 415.33 mm, D1 = 411.019 mm, D2 = 408.719 mm and D3 = 407.29 mm.

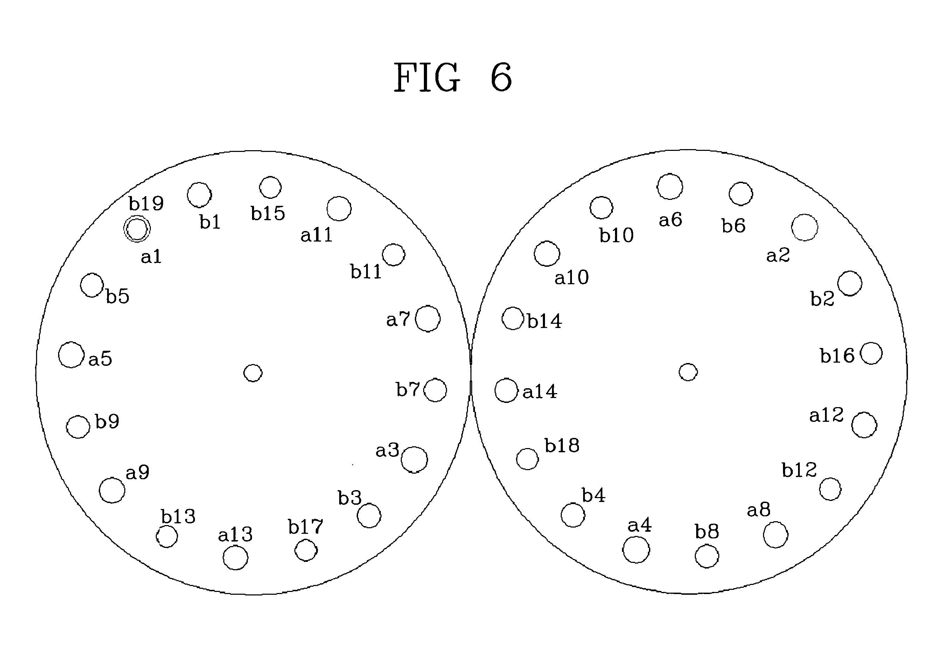

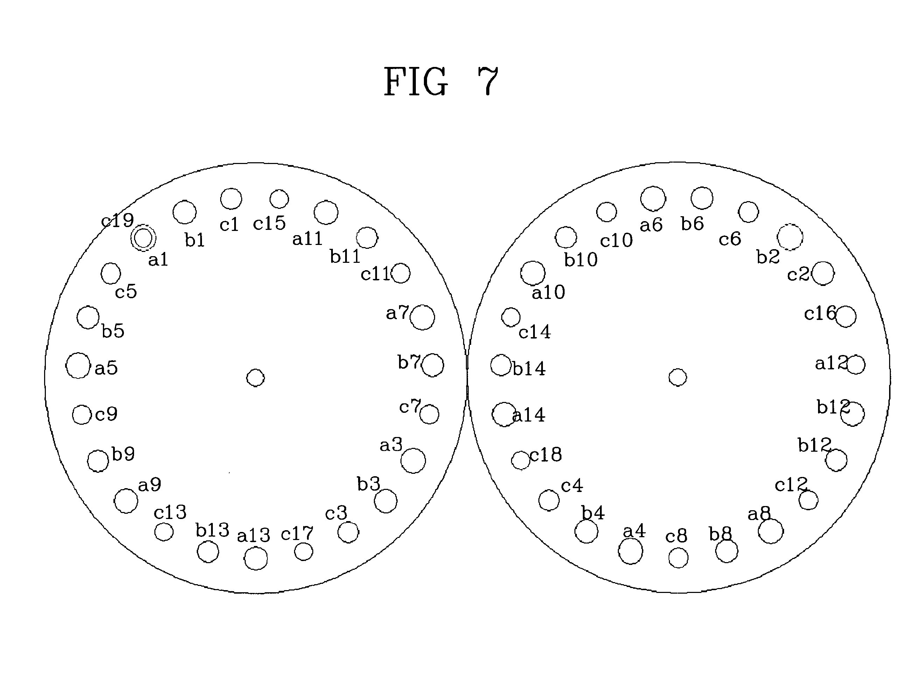

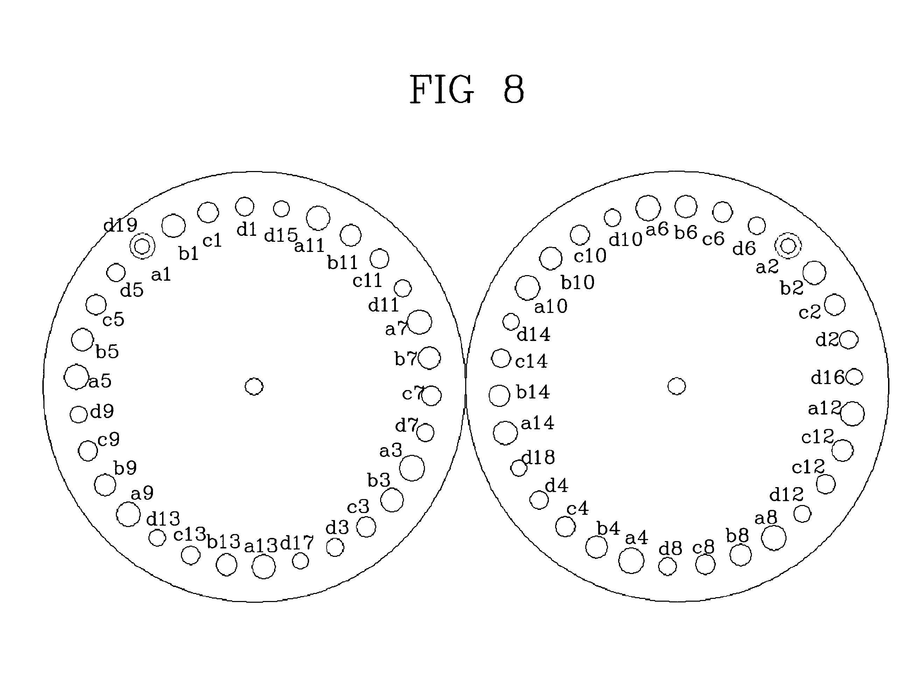

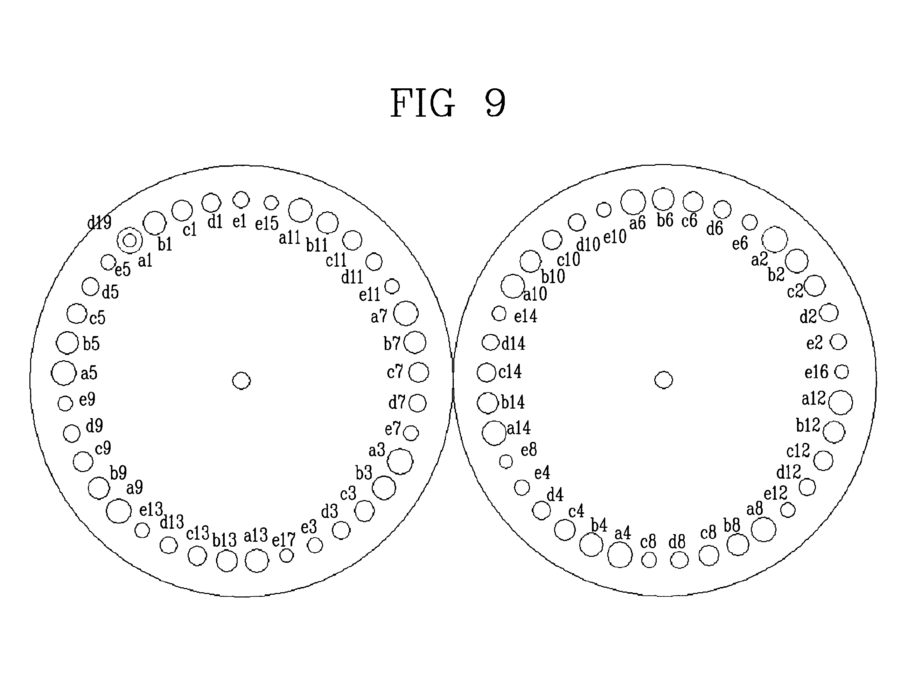

Figures 5 to 9 show the process of reflection of the beam of light on the two mirrors in successive configurations, that is to say, from the configuration with a single revolution (Figure 5) to the configuration with five revolutions (Figure 9).

In particular, on each mirror the intercepts "I" are shown with circles whose diameters gradually become smaller, representing attenuation of beam with each reflection.

More precisely, the letter "a" denotes the intercepts of the beam of light in the first revolution, the letter "b" denotes the intercepts of the beam of light in the second revolution, the letter "c" denotes the intercepts of the beam of light in the third revolution, the letter "d" denotes the intercepts of the beam of light in the fourth revolution and the letter "e" denotes the intercepts of the beam of light in the fifth revolution.

It should be noticed that in this example the maximum range of the distances is 14.151 mm, that is to say, approximately 3.1% of D1.

In light of this, it is possible to set the cell with just four configurations, having two, three, four and five revolutions, so that the range between the distances does not exceed 8 mm, or 2%. The invention fulfils the preset aims and brings important advantages.

The method allows a versatile, compact Herriott multipass cell to be made, since the configurations obtained are defined by distances between the mirrors which are close to the reference distance. Moreover, the Herriott cell according to this invention is simple to make, because it is easy to find a movement element able to move the mirrors by such limited quantities.

## Claims

1. A method for making a Herriott multipass cell (1), comprising the steps of:

   - preparing two concave mirrors (3) having the same spherical curvature with a radius of curvature (r), so that the length (L) of an optical path that a beam of light (R) completes inside the cell (1), performing a number of passes (P) and a number of revolutions (G), is defined by the values of the radius of curvature (r) and a distance (D) between the mirrors (3);
   - preparing an element (5) for moving one mirror (3) relative to the other, for moving the two mirrors (3) towards or away from each other, for positioning the mirrors (3) in a plurality of predetermined configurations defining a corresponding plurality of values of the distance (D) between the mirrors (3) and therefore a corresponding plurality of values of the length (L) of the optical path, there being a predetermined number of configurations;
   **characterised in that** said plurality of values of the distance (D) between the mirrors (3) corresponding to the plurality of configurations is determined by means of the following steps:

   a) setting a reference value for the distance (Dref) between the mirrors (3), a value for the maximum number of passes (Pmax) and a value for the maximum number of revolutions (Gmax) which is greater than or equal to the predetermined number for the cell (1) configurations;
   b) selecting a first number of revolutions (G1) for the first configuration, depending on the maximum number of revolutions (Gmax);
   c) deriving a value for the radius of curvature (r) of the mirrors (3) and a first value (D1) for the distance between the mirrors, for the first configuration, depending on the maximum number of revolutions (Gmax), the maximum number of passes (Pmax) and the reference distance (Dref) between the mirrors (3) which were set in step (a) and according to the first number of revolutions (G1) selected in step (b);
   d) selecting a second number of revolutions (G2), different to the first number of revolutions (G1) previously selected, for the second configuration, according to the maximum number of revolutions (Gmax);
   e) deriving a second value (D2) for the distance between the mirrors for the second configuration, depending on the maximum number of revolutions (Gmax) and the maximum number of passes (Pmax) which were set in step (a) and according to the second number of revolutions (G2) selected in step (d);
   f) repeating steps (d) and (e) for the additional configurations, until a predetermined number of configurations has been reached.

2. The method according to claim 1, wherein the selecting step (b) comprises selecting the first number of revolutions (G1) equal to Gmax/2, if Gmax is an even number, or equal to (Gmax+1)/2, if Gmax is an odd number.

3. The method according to claim 1 or 2, wherein step (c) comprises deriving the value of the radius of curvature (r) and the first value (D1) for the distance between the mirrors, according to a number of passes (P1) equal to Pmax*(G1/Gmax) and according to the reference distance (Dref).

4. The method according to any of the foregoing claims, wherein step (d) comprises selecting the second number of revolutions (G2) so that G2=G1+k, where k is an integer greater than -G1.

5. The method according to claim 4, wherein step (d) comprises selecting the number of revolutions (Gk) of a configuration by adding or subtracting a unit to/from the number of revolutions (Gk-1) selected for the previous configuration.

6. The method according to any of the foregoing claims, wherein the step of preparing the movement element (5) comprises the movement element (5) moving the two mirrors (3) towards or away from each other between a plurality of separate positions corresponding to the plurality of values for the distance (D) between the mirrors (3).

7. The method according to claim 6, wherein the movement element (5) is prepared in such a way that it positions the mirrors (3) at the predetermined distances (D) according to a command issued by a user.

8. The method according to any of the foregoing claims, wherein only one of the mirrors (3) comprises a beam (R) inlet and outlet hole (14), the movement element (5) being prepared in such a way that it only moves the mirror (3) comprising the hole (14).

9. A Herriott multipass cell comprising:

   - two concave mirrors (3) having the same spherical curvature with a radius of curvature (r), the mirrors being positioned so that the length (L) of an optical path that a beam of light

(R) completes inside the cell (1), performing a number of passes (P) and a number of revolutions (G), is defined by the values of the radius of curvature (r) and a distance (D) between the mirrors (7);

- a movement element (5) connected to at least one of the mirrors (3), for varying the distance (D) between the mirrors (3), for positioning the mirrors (3) in a plurality of predetermined configurations defining a corresponding plurality of values of the length (L) of the optical path, there being a predetermined number of configurations,

**characterised in that** the values of the plurality of values of the distance (D) between the mirrors are selected according to a reference value (Dref) for the distance between the mirrors (3), a predetermined value for the maximum number of passes (Pmax) and a predetermined value for the maximum number of revolutions (Gmax) according to the predetermined number for the configurations of the cell (1).

10. The Herriott cell according to claim 9, wherein the movement element (5) is configured in such a way that it moves at least one of the mirrors (3) between a plurality of separate positions corresponding to the plurality of values for the distance (D) between the mirrors (3).

11. The Herriott cell according to claim 10, comprising an operating element accessible from the outside of the cell (1) and connected to the movement element (5) for positioning the mirrors (3) at the predetermined distances (D) according to a command issued by a user.

12. The Herriott cell according to any of the claims from 9 to 11, wherein only one of the two mirrors (3) comprises a hole (14) for beam (R) inlet and outlet, the movement element (5) being prepared in such a way that it only moves the mirror (3) comprising the hole (14).

FIG 1

EP 2 375 237 A1

FIG 2

FIG 3

EP 2 375 237 A1

FIG 4

EP 2 375 237 A1

# FIG 5

EP 2 375 237 A1

# FIG 6

EP 2 375 237 A1

# FIG 7

# FIG 8

EP 2 375 237 A1

# FIG 9

EP 2 375 237 A1

EP 2 375 237 A1

Europäisches Patentamt
European Patent Office
Office européen des brevets

**EUROPEAN SEARCH REPORT**

Application Number

EP 10 42 5102

| | | DOCUMENTS CONSIDERED TO BE RELEVANT | | | |
|---|---|---|---|---|---|
| Category | Citation of document with indication, where appropriate, of relevant passages | | | Relevant to claim | CLASSIFICATION OF THE APPLICATION (IPC) |
| X | ALTMANN J ET AL: "Two-mirror multipass absorption cell" APPLIED OPTICS USA, vol. 20, no. 6, 15 March 1981 (1981-03-15) , pages 995-999, XP002593621 ISSN: 0003-6935 * figures 1-4 * * paragraph [00I.] - paragraph [0IV.] * | | | 1-12 | INV. G01N21/03 |
| X | ROBERT C: "Simple, stable, and compact multiple-reflection optical cell for very long optical paths" APPLIED OPTICS OPTICAL SOCIETY OF AMERICA USA, [Online] vol. 46, no. 22, August 2007 (2007-08), pages 5408-5418, XP002593583 ISSN: 0003-6935 [retrieved on 2010-07-23] * page 5408, column 2, line 15 - page 5409, column 1, line 8 * * page 5409, column 2, last paragraph - page 5411, column 2, line 12; figures 2-4 * | | | 1-12 | |
| | | | | | TECHNICAL FIELDS SEARCHED (IPC) |
| | | | | | G01N |
| X | MCMANUS J B ET AL: "Narrow optical interference fringes for certain setup conditions in multipass absorption cells of the Herriott type" APPLIED OPTICS USA, vol. 29, no. 7, 1 March 1990 (1990-03-01), pages 898-900, XP002593622 ISSN: 0003-6935 * page 898, line 6 - page 899, column 1, line 20; figures 1,2; table 1 * | | | 1-12 | |
| | -/-- | | | | |

The present search report has been drawn up for all claims

| Place of search | Date of completion of the search | Examiner |
|---|---|---|
| Munich | 26 July 2010 | Consalvo, Daniela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

19

Europäisches
Patentamt

European
Patent Office

Office européen
des brevets

# EUROPEAN SEARCH REPORT

Application Number

EP 10 42 5102

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 972 922 A1 (SIT SRL [IT]) 24 September 2008 (2008-09-24) * paragraph [0005] - paragraph [0013]; figures 1-4; tables 1,2 * ----- | 1-12 | |
| X | EP 1 621 867 A1 (SOUTHWEST SCIENCES INC [US]) 1 February 2006 (2006-02-01) * paragraph [0006] - paragraph [0010] * * paragraph [0089] - paragraph [0090]; figures 12,13 * ----- | 1-12 | |
| A | US 2007/246653 A1 (ZHOU XIN [US]) 25 October 2007 (2007-10-25) * paragraph [0050] - paragraph [0053]; figure 4 * ----- | 1-12 | |
| A | JP 9 005232 A (MITSUBISHI HEAVY IND LTD) 10 January 1997 (1997-01-10) * abstract; figure 1 * ----- | 1-12 | |
| | | | TECHNICAL FIELDS SEARCHED (IPC) |

The present search report has been drawn up for all claims

| Place of search | Date of completion of the search | Examiner |
|---|---|---|
| Munich | 26 July 2010 | Consalvo, Daniela |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 10 42 5102

This annex lists the patent family members relating to the patent documents cited in the above-mentioned European search report.
The members are as contained in the European Patent Office EDP file on
The European Patent Office is in no way liable for these particulars which are merely given for the purpose of information.

26-07-2010

| Patent document cited in search report | | Publication date | Patent family member(s) | | Publication date |
|---|---|---|---|---|---|
| EP 1972922 | A1 | 24-09-2008 | NONE | | |
| EP 1621867 | A1 | 01-02-2006 | AT US | 445150 T 2006158644 A1 | 15-10-2009 20-07-2006 |
| US 2007246653 | A1 | 25-10-2007 | NONE | | |
| JP 9005232 | A | 10-01-1997 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1972922 A